# EUROPÄISCHE PATENTANMELDUNG

(11) **EP 4 541 669 A1**
(43) Veröffentlichungstag der Anmeldung: **23.04.2025**
(21) Anmeldenummer: 24207293.2
(22) Anmeldetag: 17.10.2024
(51) Int. Cl.: B60R 25/10, B60R 25/00, B62H 5/20, B62J 45/413, B62J 45/414, B62J 45/415

(54) **VERFAHREN ZUR BESCHÄDIGUNGS- UND DIEBSTAHLERKENNUNG IN EINEM FAHRZEUG**

(30) Priorität: 19.10.2023 DE 102023210327
(71) Anmelder: Robert Bosch GmbH, 70442 Stuttgart (DE)
(72) Erfinder: Loeffler, Andreas, 71364 Winnenden (DE); Wolpert, Reinhold, 74196 Neuenstadt (DE)

(57) **Zusammenfassung**

Bei einem Verfahren zur Beschädigungs- und Diebstahlerkennung in einem Fahrzeug werden im Fahrzeugstillstand Sensorsignale eines Beschleunigungssensors erzeugt, wobei im Falle der Überschreitung eines Grenzwerts ein Alarmzustand vorliegt. In einer Inertialsensoreinheit zum Erfassen von Beschleunigung und Drehraten werden Sensorsignale erzeugt, die zur Bestätigung des Alarmzustands herangezogen werden.

## Beschreibung

Die Erfindung bezieht sich auf ein Verfahren zur Beschädigungs- und Diebstahlerkennung in einem Fahrzeug, insbesondere in einem Einspurfahrzeug wie beispielsweise einem Motorrad, nach dem Oberbegriff des Anspruches 1.

### Stand der Technik

In der DE 10 2009 043 620 A1 wird eine Diebstahlerkennungseinrichtung für Motorräder beschrieben, die im Fahrzeugstillstand aktiv ist und bei Erkennen einer unzulässigen Motorradbewegung ein Alarmsignal erzeugt. Die Diebstahlerkennungseinrichtung umfasst einen Schwerkraftsensor als Beschleunigungssensor, mit dem Vibrationen des Fahrzeugaufbaus im Stillstand erfasst werden. Falls derartige Vibrationen festgestellt werden, wird über eine Ausgabeeinheit ein Alarmgeräusch erzeugt.

Die US 2002/0039951 A1 beschreibt ein Motorrad, das mit einem Alarmsystem ausgestattet ist, um anhand von Vibrationen, die über einen Beschleunigungssensor detektiert werden, einen potenziellen Diebstahl des Motorrades anzuzeigen. Mithilfe des Beschleunigungssensors können Beschleunigungen in Fahrzeuglängs- und Fahrzeugquerrichtung erfasst werden.

In der WO 2017/135825 A1 wird ein Beschädigungserfassungssystem für Fahrzeuge beschrieben, mit dem Beschädigungen an der Fahrzeugkarosserie wie beispielsweise Kratzer erfasst werden. An der Karosserie ist ein Sensor angeordnet, mit dem Vibrationen und Schallwellen erfasst werden, die bei der Schadensentstehung erzeugt werden. Als Sensor werden Beschleunigungssensoren, piezoelektrische Sensoren und Gyroskope beschrieben.

### Offenbarung der Erfindung

Mithilfe des erfindungsgemäßen Verfahrens ist eine Beschädigungs- und Diebstahlerkennung in einem Fahrzeug möglich. Bei dem Fahrzeug handelt es insbesondere um ein Einspurfahrzeug wie beispielsweise Motorräder, Motorroller oder dergleichen. Grundsätzlich kommt auch eine Anwendung auf Zweispurfahrzeuge wie insbesondere Kraftfahrzeuge in Betracht.

Das Verfahren ist in Fahrzeugen anwendbar, welche auf Hardwareseite mindestens einen Beschleunigungssensor, eine Inertialsensoreinheit zum Erfassen von Beschleunigungen und Drehraten und ein Steuergerät zur Auswertung der Sensorsignale aufweist. Als Beschleunigungssensor werden insbesondere Sensoren verwendet, mit denen die Beschleunigungen in Fahrzeuglängs-, Fahrzeugquer- und Fahrzeugvertikalrichtung erfasst werden können. Es kann gegebenenfalls ausreichend sein, dass mit dem Beschleunigungssensor nur Beschleunigungen in zwei Richtungen erfasst werden, insbesondere in Fahrzeuglängsrichtung und in Fahrzeugquerrichtung. Des Weiteren ist es möglich, Beschleunigungssensoren einzusetzen, die nur eine Beschleunigung in eine einzige Fahrzeugrichtung erfassen, bei der es sich entweder um die Fahrzeuglängsrichtung, die Fahrzeugquerrichtung oder die Fahrzeugvertikalrichtung handelt.

Mithilfe der Inertialsensoreinheit, welche separat und unabhängig von dem Beschleunigungssensor ausgebildet ist, können insbesondere Beschleunigungen in alle drei Fahrzeugrichtungen sowie die Drehraten um alle drei Fahrzeugachsen bzw. -richtungen erfasst werden. Dem Steuergerät werden die Sensorsignale sowohl des Beschleunigungssensors als auch der Inertialsensoreinheit zur Auswertung zugeführt.

Mithilfe des erfindungsgemäßen Verfahrens kann sowohl ein potenzieller Diebstahl des Fahrzeugs als auch eine Beschädigung des Fahrzeugs festgestellt werden, wobei die Beschädigungen auf eine absichtliche Fremdeinwirkung (Vandalismus) oder eine unbeabsichtigte Fremdeinwirkung zurückgehen. Im Falle eines potenziellen Diebstahls kann bereits der Versuch des Diebstahls festgestellt werden.

Das Verfahren bezieht sich auf den Stillstand des Fahrzeugs. Über den Beschleunigungssensor wird im Fahrzeugstillstand fortlaufend der Zustand des Fahrzeugs untersucht. Es werden vom Beschleunigungssensor Sensorsignale erzeugt, wobei im Falle der Überschreitung eines Grenzwerts ein Alarmzustand vorliegt. Sofern dies der Fall ist, werden zusätzlich in der Inertialsensoreinheit, die separat vom Beschleunigungssensor ausgebildet ist, Sensorsignale erzeugt, die die Beschleunigung und Drehraten des Fahrzeugs wiedergeben und über die der Alarmzustand des Fahrzeugs bestätigt werden kann. Diese Ausführung hat den Vorteil, dass eine höhere Sicherheit im Hinblick auf die Erkennung von Beschädigungen oder Diebstahl gegeben ist. Die Erkennung eines Alarmzustands basiert vorteilhafterweise nicht allein auf den Sensorsignalen des Beschleunigungssensors, sondern kann zusätzlich von den Sensorsignalen der Inertialsensoreinheit bestätigt werden. Im Fall einer Bestätigung kann mit hoher Sicherheit von einer Beschädigung oder einem Diebstahl bzw. versuchten Diebstahl ausgegangen werden. Es kann gegebenenfalls zweckmäßig sein, den Alarmzustand wieder abzubrechen, falls über die Sensorsignale der Inertialsensoreinheit keine Bestätigung erfolgt.

Ein weiterer Vorteil dieser Vorgehensweise liegt darin, dass keine zusätzlichen Sensoren für das erfindungsgemäße Verfahren erforderlich sind und dennoch ein hohes Maß an Sicherheit bei der Erkennung von Beschädigungen und Diebstahl gewährleistet ist. Die Inertialsensoreinheit kann nicht nur im Betrieb des Fahrzeugs zur Zustandserfassung genutzt werden, sondern erfindungsgemäß auch im Stillstand des Fahrzeugs, um eine erkannte Beschädigung oder einen Diebstahlversuch, die bzw. der vom Beschleunigungssensor festgestellt wurde, zu verifizieren.

Ein weiterer Vorteil der erfindungsgemäßen Ausführung liegt in dem geringen Energieverbrauch. Es muss lediglich der Beschleunigungssensor bestromt werden, um eine eventuelle Beschädigung oder Diebstahl zu erfassen. Es ist dagegen nicht erforderlich, auch die Inertialsensoreinheit im Fahrzeugstillstand permanent zu bestromen. Vielmehr genügt es, dass die Inertialsensoreinheit im Fahrzeugstillstand sich im Ruhezustand befindet und erst aktiviert wird, wenn ein Beschleunigungssensorsignal den Grenzwert überschreitet und ein Alarmzustand festgestellt wird. Da insbesondere der Betrieb von Drehratensensoren, die in der Inertialsensoreinheit zum Einsatz kommen, energieintensiv ist, kann auf diese Weise der Energieverbrauch signifikant reduziert werden. Der Stromverbrauch des Beschleunigungssensors liegt beispielsweise im Mikro-Amperebereich.

Gemäß einer vorteilhaften Ausführung ist das Steuergerät im Fahrzeugstillstand in den Ruhezustand versetzt und wird erst aktiviert, wenn das Beschleunigungssensorsignal den zugeordneten Grenzwert überschreitet. Auch diese Vorgehensweise trägt zu einem energieeffizienten Betrieb bei. Es kann ausreichend sein, das Steuergerät erst zu aktivieren, wenn über die Sensorsignale der Inertialsensoreinheit der Alarmzustand bestätigt wird.

Es kann zweckmäßig sein, in dem Steuergerät mehrere zeitlich aufeinanderfolgende Sensorsignale, welche vom Beschleunigungssensor stammen, auszuwerten. Hierbei werden insbesondere nach der Aktivierung des Steuergerätes vom Beschleunigungssensor mehrere zeitlich aufeinanderfolgende Sensorsignale auf das Steuergerät übertragen und bei der Auswertung im Steuergerät zur Bestätigung des Alarmzustandes berücksichtigt.

Gemäß noch einer weiteren vorteilhaften Ausführung erfolgt die Bestätigung des Alarmzustands, indem die Sensorsignale der Inertialsensoreinheit auf Übereinstimmung mit einem vorgegebenen Bewegungsmuster überprüft werden. Das vorgegebene Bewegungsmuster entspricht einem Referenzmuster, welches sich über einen definierten Zeitraum erstreckt und mit dem die aktuellen Sensorsignale der Inertialsensoreinheit verglichen werden. Es können verschiedene Referenzmuster hinterlegt werden, um unterschiedliche Beschädigungs- und Diebstahlmuster abzubilden. Dadurch ist ein hohes Maß an Sicherheit bei der Bestätigung des Alarmzustands realisierbar.

Zusätzlich oder alternativ ist es auch möglich, dass die Sensorsignale der Inertialsensoreinheit auf Überschreitung eines zugeordneten Grenzwerts überprüft werden.

Gemäß noch einer weiteren vorteilhaften Ausführung wird auch ein Transceiver, welcher einem Datenbus zur Übertragung von Sensorsignalen zugeordnet ist, im Fahrzeugstillstand in den Ruhezustand versetzt und erst wieder aktiviert, falls ein Alarmzustand vorliegt. Der Transceiver stellt ein Interface zwischen dem Steuergerät und einem Datenbus, insbesondere einem CAN-Bus dar. Es kann ausreichend sein, den Transceiver erst wieder zu aktivieren, wenn über die Sensorsignale der Inertialsensoreinheit der Alarmzustand bestätigt wird. Alternativ ist es auch möglich, den Transceiver bereits zu aktivieren, wenn ein Sensorsignal des Beschleunigungssensors einen Grenzwert überschreitet.

Bei Feststellung eines Alarmzustands kann ein Alarmsignal erzeugt werden, das auf verschiedene Weise weiterverarbeitet werden kann. So ist es insbesondere möglich, das Alarmsignal in einer Ausgabeeinheit zur Anzeige zu bringen, insbesondere auf akustische und/oder optische Weise am Fahrzeug selbst. Alternativ oder zusätzlich ist es auch möglich, das Alarmsignal auf eine externe Datenverarbeitungseinheit zu übertragen, in der das Alarmsignal weiterverarbeitet wird. Es ist beispielsweise möglich, ein externes Überwachungssystem zu aktivieren, das eine optische und/oder akustische Alarmanzeige umfasst. Das Überwachungssystem kann gegebenenfalls eine Kamera aufweisen, welche durch das Alarmsignal aktiviert wird.

Die Erfindung bezieht sich des Weiteren auf eine Beschädigungs- und Diebstahlerkennungseinrichtung für ein Fahrzeug zur Durchführung des vorbeschriebenen Verfahrens. Die Beschädigungs- und Diebstahlerkennungseinrichtung umfasst wie vorbeschrieben einen Beschleunigungssensor zum Erfassen von Beschleunigungen im Fahrzeugstillstand, eine Inertialsensoreinheit zum Erfassen von Beschleunigungen und Drehraten sowohl im Fahrzeugbetrieb als auch im Fahrzeugstillstand und ein Steuergerät zur Verarbeitung der Sensorsignale sowohl des Beschleunigungssensors als auch der Inertialsensoreinheit.

Die Erfindung bezieht sich außerdem auf ein Fahrzeug, insbesondere ein Einspurfahrzeug wie beispielsweise ein Motorrad oder ein Motorroller, mit einer vorbeschriebenen Beschädigungs- und Diebstahlerkennungseinrichtung.

Die Erfindung bezieht sich außerdem auf ein Computerprogrammprodukt mit einem Programmcode, der dazu ausgelegt ist, die vorbeschriebenen Verfahrensschritte auszuführen. Das Computerprogrammprodukt läuft in dem Steuergerät ab.

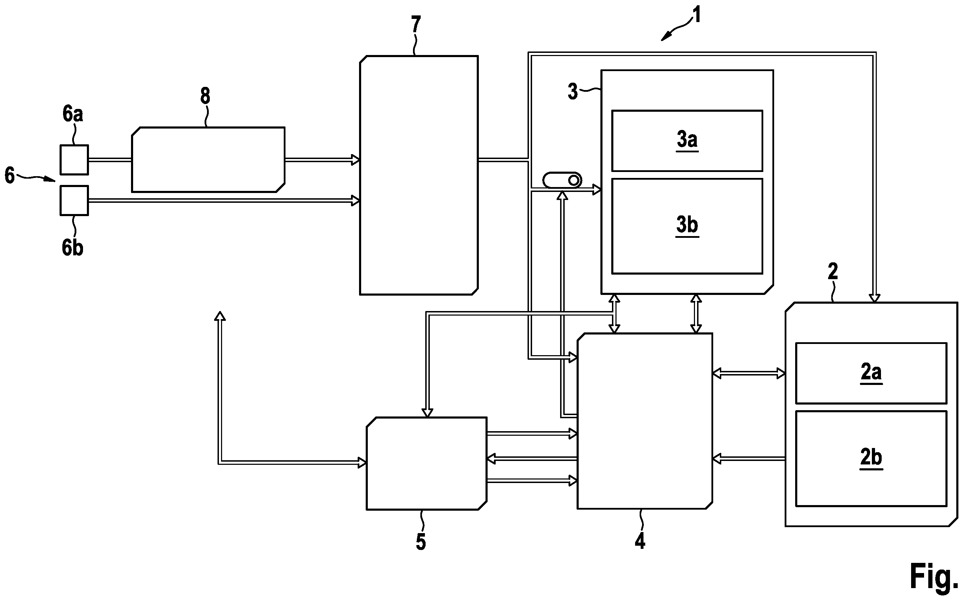

Weitere Vorteile und zweckmäßige Ausführungen sind den weiteren Ansprüchen, der Figurenbeschreibung und der Zeichnung zu entnehmen, die ein Blockschaltbild einer Beschädigungs- und Diebstahlerkennungseinrichtung für ein Fahrzeug zeigt.

Die dargestellte Beschädigungs- und Diebstahlerkennungseinrichtung 1 kann in einem Fahrzeug verbaut werden, um Beschädigungen und Diebstahlversuche zu erkennen und anzuzeigen. Die Beschädigungs- und Diebstahlerkennungseinrichtung 1 wird vorzugsweise in Einspurfahrzeugen wie zum Beispiel Motorräder oder Motorroller eingebaut, wobei auch ein Einbau in Zweispurfahrzeugen wie beispielsweise Kraftfahrzeuge möglich ist.

Die Beschädigungs- und Diebstahlerkennungseinheit 1 umfasst einen Beschleunigungssensor 2, mit dem Fahrzeugbeschleunigungen entlang der Fahrzeuglängs-, Fahrzeugquer- und Fahrzeughochachse gemessen werden können. Der Beschleunigungssensor 2 umfasst ein Sensorteil 2a und einen integrierten Schaltkreis (ASIC) 2b mit einem Microcontroller und einer Bus-Schnittstelle.

Des Weiteren ist die Beschädigungs- und Diebstahlerkennungseinrichtung 1 mit einer Inertialsensoreinheit 3 ausgestattet, die separat von dem Beschleunigungssensor 2 ausgebildet ist und auch in ein eigenen Gehäuse integriert ist. Die Inertialsensoreinheit 3 umfasst ein Sensorteil 3a, über das Längsbeschleunigungen in Fahrzeuglängs-, Fahrzeugquer- und Fahrzeughochrichtung gemessen werden können. Darüber hinaus kann das Sensorteil 3a Drehraten um die Fahrzeuglängs-, Fahrzeugquer- und Fahrzeughochrichtung messen. Zur Inertialsensoreinheit 3 gehört außerdem ein integrierter Schaltkreis (ASIC) 3b mit einem Microcontroller und einer Bus-Schnittstelle.

Bestandteil der Beschädigungs- und Diebstahlerkennungseinrichtung 1 ist außerdem ein Steuergerät 4, das sowohl mit dem Beschleunigungssensor 2 als auch der Inertialsensoreinheit 3 kommuniziert. Darüber hinaus ist das Steuergerät 4 mit einem Transceiver 5 verbunden, der als Schnittstelle zwischen dem Steuergerät 4 und einem CAN-Bus fungiert.

Die Energieversorgung erfolgt über einen Batterieanschluss 6 mit einer Batteriespannung 6a und einer Erdung 6b, die am Eingang eines Spannungsreglers 7 anliegen, an den der Beschleunigungssensor 2, die Inertialsensoreinheit 3 und das Steuergerät 4 angeschlossen sind. Zwischen der Batteriespannung 6a und dem Spannungsregler 7 befindet sich ein Spannungspuffer 8.

Die Inertialsensoreinheit 3 kann nicht nur im Rahmen der Beschädigungs- und Diebstahlerkennungseinrichtung 1 im Fahrzeug eingesetzt werden, sondern auch während der Fahrt, um Fahrzustandsgrößen zu sensieren. In der Beschädigungs- und Diebstahlerkennungseinrichtung 1 wird dagegen die Inertialsensoreinheit 3 im Fahrzeugstillstand unterstützend bei der Erkennung einer Beschädigung oder eines Diebstahlversuchs eingesetzt. Im Fahrzeugstillstand ist zunächst nur der Beschleunigungssensor 2 aktiv, wohingegen die Inertialsensoreinheit 3, der Microcontroller 4 und der Transceiver 5 sich in einem Ruhe- oder Schlafzustand befinden, in welchem der Stromverbrauch bei null oder annähernd null liegt. Der Beschleunigungssensor 2 ist permanent aktiv, jedoch mit einer geringen Stromaufnahme, die im Mikro-Amperebereich liegt. Hierdurch ist es möglich, das Fahrzeug kontinuierlich zu überwachen, ohne die Energieversorgung im Fahrzeug zu stark zu belasten.

Bei aktiver Beschädigungs- und Diebstahlerkennungseinrichtung 1 im Fahrzeugstillstand ist der Beschleunigungssensor 2 aktiv und sensiert fortlaufend Beschleunigungswerte. Diese werden auf Überschreitung eines zugeordneten Grenzwerts untersucht, wobei für den Fall der Überschreitung des Grenzwerts ein Alarmzustand erkannt wird, wodurch verschiedene weitere Maßnahmen ausgelöst werden. Zunächst wird das Steuergerät 4 aus dem Ruhezustand in den aktiven Zustand versetzt, das seinerseits die Inertialsensoreinheit 3 aktiviert. Auch der Transceiver 5 kann aus dem Ruhezustand aufgeweckt werden.

Die Inertialsensoreinheit 3 erzeugt Sensorsignale, die zur Bestätigung oder Nicht-Bestätigung des Alarmzustands herangezogen und ausgewertet werden. Eine Bestätigung des Alarmzustands liegt vor, wenn ein sensiertes Bewegungsmuster, also eine zeitliche Folge von mehreren Sensorsignalen, mit einem vorgegebenen Referenzbewegungsmuster übereinstimmt. In diesem Fall kann mit hoher Sicherheit davon ausgegangen werden, dass ein Alarmzustand vorliegt.

Zusätzlich oder alternativ zur Überprüfung eines Bewegungsmusters ist es auch möglich, einzelne Sensorsignale der Inertialsensoreinheit 3 auf Überschreitung eines zugeordneten Grenzwerts zu überprüfen. Im Falle einer Überschreitung liegt ebenfalls eine Bestätigung des Alarmzustandes vor.

Bei Bestätigung des Alarmzustands wird ein Alarmsignal erzeugt, das auf verschiedene Weise weiterverarbeitet werden kann. Zum einen ist es möglich, das Alarmsignal einer Ausgabeeinheit zur Anzeige zu bringen, insbesondere auf akustische oder optische Weise. Zum andern kann das Alarmsignal an eine externe Datenverarbeitungseinheit übertragen werden, um beispielsweise externe Ausgabe- oder Eingabeeinheiten zu aktivieren, zum Beispiel eine externe Lichtanlage oder Alarmanlage oder eine Kamera, um Aufnahmen von dem Fahrzeug zu machen.

Sofern die Auswertung der Sensorsignale der Inertialsensoreinheit ergibt, dass kein Alarmzustand vorliegt, kann der Alarmzustand abgebrochen werden. Daraufhin können die Inertialsensoreinheit 3, das Steuergerät 4 und auch der Transceiver 5 wieder in den Ruhezustand versetzt werden.

## Patentansprüche

1. Verfahren zur Beschädigungs- und Diebstahlerkennung in einem Fahrzeug, insbesondere in einem Einspurfahrzeug, bei dem im Fahrzeugstillstand Sensorsignale eines Beschleunigungssensors (2) erzeugt werden, wobei im Falle der Überschreitung eines Grenzwerts ein Alarmzustand vorliegt, **dadurch gekennzeichnet, dass** bei Überschreitung des Grenzwerts Sensorsignale einer separat vom Beschleunigungssensors (2) ausgebildeten Inertialsensoreinheit (3) zum Erfassen von Beschleunigungen und Drehraten zur Bestätigung des Alarmzustands herangezogen werden.

2. Verfahren nach Anspruch 1, **dadurch gekennzeichnet, dass** im Fahrzeugstillstand ein Steuergerät (4) zur Auswertung der Sensorsignale des Beschleunigungssensors (2) in den Ruhezustand versetzt ist und aktiviert wird, falls ein Sensorsignal des Beschleunigungssensors den Grenzwert überschreitet.

3. Verfahren nach Anspruch 3, **dadurch gekennzeichnet, dass** das Steuergerät (4) die Inertialsensoreinheit (3) aktiviert, falls ein Sensorsignal des Beschleunigungssensors (2) den Grenzwert überschreitet.

4. Verfahren nach einem der Ansprüche 1 bis 3, **dadurch gekennzeichnet, dass** in dem Steuergerät (4) mehrere zeitlich aufeinanderfolgende Sensorsignale des Beschleunigungssensors (2) ausgewertet werden

5. Verfahren nach einem der Ansprüche 1 bis 4, **dadurch gekennzeichnet, dass** die Bestätigung des Alarmzustands durch Überprüfen der Sensorsignale der Inertialsensoreinheit (3) auf Übereinstimmung mit einem vorgegebenen Bewegungsmuster erfolgt.

6. Verfahren nach einem der Ansprüche 1 bis 5, **dadurch gekennzeichnet, dass** die Bestätigung des Alarmzustands durch Überprüfen der Sensorsignale der Inertialsensoreinheit (3) auf Überschreitung eines zugeordneten Grenzwerts erfolgt.

7. Verfahren nach einem der Ansprüche 1 bis 6, **dadurch gekennzeichnet, dass** einem Datenbus zur Übertragung von Sensorsignalen ein Transceiver (5) zugeordnet ist, der im Fahrzeugstillstand in den Ruhezustand versetzt ist und aktiviert wird, falls ein Alarmzustand vorliegt.

8. Verfahren nach einem der Ansprüche 1 bis 7, **dadurch gekennzeichnet, dass** bei Feststellung eines Alarmzustands ein Alarmsignal erzeugt wird, das in einer Ausgabeeinheit zur Anzeige gebracht wird.

9. Verfahren nach einem der Ansprüche 1 bis 8, **dadurch gekennzeichnet, dass** bei Feststellung eines Alarmzustands ein Alarmsignal erzeugt wird, das auf eine externe Datenverarbeitungseinheit übertragen wird.

10. Beschädigungs- und Diebstahlerkennungseinrichtung für ein Fahrzeug, insbesondere für ein Einspurfahrzeug, zur Durchführung des Verfahrens nach einem der Ansprüche 1 bis 9, mit einem Beschleunigungssensor (2) zum Erfassen von Beschleunigungen im Fahrzeugstillstand, mit einer Inertialsensoreinheit (3) zum Erfassen von Beschleunigungen und Drehraten und mit einem Steuergerät (4) zur Verarbeitung der Sensorsignale des Beschleunigungssensors (2) und der Inertialsensoreinheit (3).

11. Fahrzeug, insbesondere für ein Einspurfahrzeug, mit einer Beschädigungs- und Diebstahlerkennungseinrichtung (1) nach Anspruch 10.

12. Computerprogrammprodukt mit einem Programmcode, der dazu ausgelegt ist, Schritte des Verfahrens nach einem der Ansprüche 1 bis 9 auszuführen, wenn das Computerprogrammprodukt in einem Steuergerät (4) abläuft.
